# EUROPEAN PATENT APPLICATION

(11) **EP 4 245 984 A1**
(43) Date of publication of application: **20.09.2023**
(21) Application number: 23160310.1
(22) Date of filing: 07.03.2023
(51) Int. Cl.: F02N 11/10, F02N 11/08

(54) **ENGINE DIAGNOSTIC DEVICE AND ENGINE DIAGNOSING METHOD**

(30) Priority: 14.03.2022 JP 2022039004
(71) Applicant: TOYOTA JIDOSHA KABUSHIKI KAISHA, Aichi-Ken 471-8571 (JP)
(72) Inventor: YOSHIHARA, Masatomo, TOYOTA-SHI, AICHI-KEN, 471-8571 (JP); TOYAMA, Hiroyuki, TOYOTA-SHI, AICHI-KEN, 471-8571 (JP)
(74) Representative: Cabinet Beau de Loménie

(57) **Abstract**

An engine diagnostic device (12) is configured to diagnose an engine (10) that executes an intermittent stop control in accordance with a traveling state of a vehicle. When N represents a predetermined natural number that is greater than or equal to two and a long cranking start refers to a start of the engine (10) taking a predetermined time or longer, if the long cranking start has occurred N times, the engine diagnostic device (12) is configured to diagnose the engine as having a startability deterioration.

## Description

### BACKGROUND

### 1. Field

The following description relates to an engine diagnostic device and an engine diagnosing method that diagnose whether the startability of an engine has deteriorated.

### 2. Description of Related Art

Japanese Laid-Open Patent Publication No. 2000-356152 discloses that an engine is diagnosed as having startability deterioration when a start time of the engine is longer than a predetermined time. The start time of the engine refers to a time from the beginning of starting the engine to completion of starting the engine.

The engine start time intrinsically varies widely. Hence, even when there is no problem with the engine, a start time of the engine may be relatively long. In such a case, the diagnostic means disclosed in the related art may erroneously diagnose the engine as having startability deterioration.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

One aspect of the present disclosure is an engine diagnostic device configured to diagnose an engine that executes an intermittent stop control in accordance with a traveling state of a vehicle. When a long cranking start refers to a start of the engine taking a predetermined time or longer, if the long cranking start has occurred N times, where N represents a predetermined natural number that is greater than or equal to two, the engine diagnostic device is configured to diagnose the engine as having a startability deterioration.

The engine diagnostic device described above diagnoses the engine as having startability deterioration when the long cranking start has occurred a number of times. In other words, the engine diagnostic device diagnoses the engine as having no startability deterioration when the engine takes a long time to start just one time. Thus, deterioration in the startability of the engine is accurately diagnosed.

Even when a long cranking start occurs, if a short, normal start consecutively occurs a number of times subsequent to the long cranking start, the cause of the long cranking start may be highly likely to have been resolved. Therefore, even when the long cranking start has occurred N times, if a start of the engine taking less than the predetermined time has consecutively occurred a predetermined number of times or more during a period in which the long cranking start has occurred N times, it is desirable that the engine diagnostic device is configured to diagnose the engine as having no startability deterioration.

When the ignition switch is turned on to start the engine, the long cranking start may occur. The long cranking start may occur N times including subsequent starts of the engine caused by the intermittent stop control. The environmental condition of the engine differs between when the engine is started by turning on the ignition switch and when the engine is subsequently started by the intermittent stop control. Thus, the cause of long cranking starts may vary. Therefore, even when the long cranking start has occurred N times, if among the N times of the long cranking starts, a first long cranking start was not caused by the intermittent stop control, it is desirable that the engine diagnostic device is configured to diagnose the engine as having no startability deterioration.

During a start of the engine, the emission efficiency of the engine and the fuel efficiency are lower than during a normal operation, which is performed after the start of the engine is completed. It is desirable that when the engine is diagnosed as having a startability deterioration, the engine diagnostic device prohibits the intermittent stop control to decrease the frequency of starting the engine.

When the startability of the engine has deteriorated, it is desirable that an occupant of the vehicle or a user be notified of the abnormality of the engine so that the occupant or the user is prompted to inspect and repair the engine. However, the cause of the startability deterioration of the engine may be spontaneously resolved in a soak period after the ignition switch is turned off. In such a case, inspection and repair are not necessary. In this case, a notification prompting the user to inspect and repair the vehicle would be troublesome. Therefore, it is desirable that when the engine is diagnosed as having a startability deterioration in a predetermined number of consecutive trips of the vehicle, the engine diagnostic device issues a notification that the engine has an abnormality.

Another aspect of the present disclosure is a method for diagnosing an engine that executes an intermittent stop control in accordance with a traveling state of a vehicle. The method includes when N represents a predetermined natural number that is greater than or equal to two and a long cranking start refers to a start of the engine taking a predetermined time or longer, if the long cranking start has occurred N times, diagnosing the engine as having a startability deterioration.

Other features and aspects will be apparent from the following detailed description, the drawings, and the claims.

### BRIEF DESCRIPTION OF THE DRAWINGS

Fig. 1 is a schematic diagram showing the structure of an embodiment of an engine diagnostic device.
Fig. 2 is a flowchart of a post-start process executed by the engine diagnostic device shown in Fig. 1.
Fig. 3 is a flowchart of an IG-off process executed by the engine diagnostic device shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

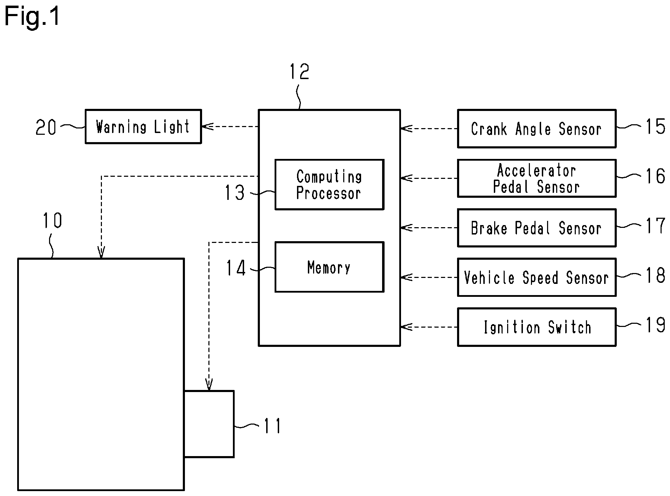

An embodiment of an engine diagnostic device will be described below with reference to Figs. 1 to 3.

### Structure of Engine Diagnostic Device

The structure of the engine diagnostic device will now be described with reference to Fig. 1. In the present embodiment, the engine diagnostic device diagnoses an engine 10 that is mounted on a vehicle. The engine 10 includes a starter motor 11 for starting the engine. An engine control module 12 (hereafter, referred to as ECM) is mounted on the vehicle. The ECM 12 controls the engine 10 and the starter motor 11. The ECM 12 diagnoses the engine 10 in a part of engine control. In the present embodiment, the ECM 12 corresponds to the engine diagnostic device.

The ECM 12 includes a computing processor 13 (processor) and memory 14. The memory 14 stores programs and data for controlling and diagnosing the engine 10. The computing processor 13 obtains programs from the memory 14 and runs the programs to execute processes for controlling and diagnosing the engine 10. The computing processor 13 diagnoses the engine 10 and records a result of the diagnosis in the memory 14.

The ECM 12 receives signals from sensors arranged on various parts of the vehicle. The sensors inputting signals into the ECM 12 include a crank angle sensor 15, an accelerator pedal sensor 16, a brake pedal sensor 17, and a vehicle speed sensor 18. The crank angle sensor 15 is configured to detect a rotational phase of a crankshaft of the engine 10. The accelerator pedal sensor 16 is configured to detect a depression amount of the accelerator pedal operated by the driver of the vehicle. The brake pedal sensor 17 is configured to detect a depression amount of the brake pedal operated by the driver of the vehicle. The vehicle speed sensor 18 is configured to detect the travel speed of the vehicle. The ECM 12 receives a signal indicating the operation state of an ignition switch 19. In addition, the ECM 12 is connected to a warning light 20 for notifying an occupant of the vehicle that an abnormality of the engine has occurred.

The ECM 12 executes an intermittent stop control that automatically stops the engine 10 and automatically restarts the engine 10 in accordance with the travel state of the vehicle. More specifically, when the ECM 12 determines that the vehicle is at a standstill based on the vehicle speed and/or the operation state of the accelerator pedal and the brake pedal, the ECM 12 stops the engine 10. While the engine 10 is stopped by the intermittent stop control, when the ECM 12 determines that the driver is acting to start to move the vehicle based on the operation state of the accelerator pedal, the ECM 12 restarts the engine 10.

Additionally, when the engine 10 is stopped by a failure to start such as an engine stall and the driver depresses the brake pedal, the ECM 12 restarts the engine 10. In the following description, such a restart of the engine 10 caused by depression of the brake pedal is referred to as a retry start.

In the following description, a start of the engine 10 caused by the intermittent stop control is referred to an intermittent restart. An engine start other than the intermittent restart includes the retry start and an engine start caused by operation of the ignition switch 19.

### Diagnosis of Startability Deterioration

The ECM 12 diagnoses whether the startability of the engine 10 has deteriorated. The diagnosis of the startability deterioration will be described in detail. In the following description, "abnormality" refers to a state in which the startability of the engine 10 has deteriorated, and "normality" refers to as state in which the startability of the engine 10 has not deteriorated. The above diagnosis is performed in the post-start process, which is executed after the engine 10 is started, and an IG-off process, which is executed when the ignition switch 19 is turned off.

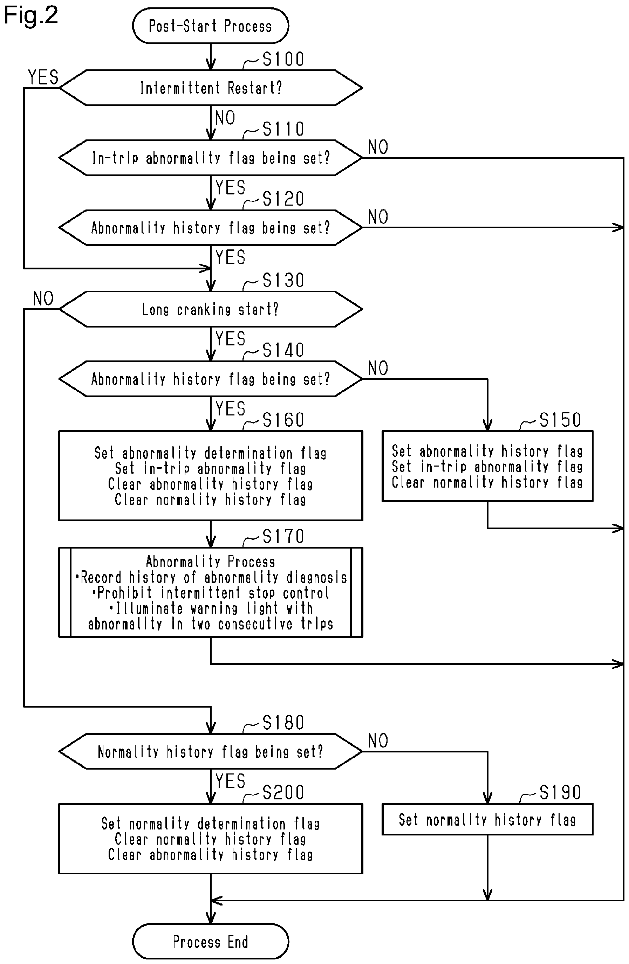

Fig. 2 is a flowchart of the post-start process. The ECM 12 executes the process shown in Fig. 2 also when the engine fails to start.

When the post-start process starts, the ECM 12 proceeds to step S100 to determine whether the present engine start is the intermittent restart. If the present engine start is the intermittent restart (100: YES), the ECM 12 proceeds to step S130. If the present engine start is not the intermittent restart (S100: NO), the ECM 12 proceeds to step S110.

In step S110, the ECM 12 determines whether an in-trip abnormality flag is set. If the in-trip abnormality flag is not set (S110: NO), the ECM 12 ends the post-start process for the present engine start. If the in-trip abnormality flag is set (S110: YES), the ECM 12 proceeds to step S120.

In step S120, the ECM 12 determines whether an abnormality history flag is set. If the abnormality history flag is not set (S120: NO), the ECM 12 ends the post-start process for the present engine start. If the abnormality history flag is set (S120: YES), the ECM 12 proceeds to step S130.

The ECM 12 proceeds to step S130 in the following two cases. The first case is a case in which the present engine start is the intermittent restart. The second case is a case in which the present engine start differs from the intermittent restart and both of the in-trip abnormality flag and the abnormality history flag are set.

In step S130, the ECM 12 determines whether the present engine start is the long cranking start. When a start of the engine 10 begins and then the engine speed becomes a predetermined start completion determination value or greater, the ECM 12 determines that the starting of the engine 10 is completed. When the starting of the engine is completed before a predetermined time elapses from the beginning of starting the engine, the ECM 12 determines that the present starting of the engine is normal.

When the starting of the engine is not completed before the predetermined time elapses from the beginning of starting the engine, the ECM 12 determines that the present engine start is a long cranking start. In other words, the long cranking start refers to a start of the engine 10 taking the predetermined time or longer. The long cranking start includes a case in which the engine 10 fails to start. When the present engine start is the long cranking start (S130: YES), the ECM 12 proceeds to step S140. When the present engine start is not the long cranking start (S130: NO), that is, the present engine start is normal, the ECM 12 proceeds to step S180.

In step S140, the ECM 12 determines whether the abnormality history flag is set. If the abnormality history flag is not set (S140: NO), the ECM 12 proceeds to step S150 to set the abnormality history flag and the in-trip abnormality flag and clear a normality history flag. After step S150, the ECM 12 ends the post-start process for the present engine start.

If the abnormality history flag is set (S140: YES), the ECM 12 proceeds to step S160. In step S160, the ECM 12 sets an abnormality determination flag and the in-trip abnormality flag. In step S160, the ECM 12 clears the abnormality history flag and the normality history flag.

The abnormality determination flag is set when the ECM 12 diagnoses that there is an abnormality. Therefore, when the abnormality history flag is set and the long cranking start occurs, the ECM 12 diagnoses that there is an abnormality, that is, the startability of the engine 10 has deteriorated.

In addition, after step S160, the ECM 12 proceeds to step S170 and executes an abnormality process. The abnormality process is executed when it is diagnosed that there is an abnormality. In the present embodiment, the ECM 12 executes the following processes as the abnormality process. In the abnormality process, the ECM 12 records a history of abnormality diagnosis in the memory 14. The history of abnormality diagnosis includes information indicating states of the engine 10 and the vehicle such as the engine water temperature, the outside air temperature, and the total distance traveled at the time of diagnosing as abnormality. In the abnormality process, the ECM 12 prohibits the intermittent stop control of the engine 10. In addition, in the abnormality process, if the ECM 12 diagnosed that there was an abnormality in the previous trip of the vehicle, that is, there was an abnormality in two consecutive trips, the ECM 12 illuminates the warning light 20. After the abnormality process is executed, the ECM 12 ends the post-start process for the present engine start.

A process executed by the ECM 12 when determining that the present engine start is not the long cranking start in step S130 (S130: NO) will now be described. In this case, the ECM 12 proceeds to step S180 to determine whether the normality history flag is set. If the normality history flag is not set (S180: NO), the ECM 12 proceeds to step S190 to set the normality history flag.

If the normality history flag is set (S180: YES), the ECM 12 proceeds to step S200 to set a normality determination flag. In step S200, the ECM 12 clears the normality history flag and the abnormality history flag. Subsequent to the flag operation in step S190 or S200, the ECM 12 ends the post-start process for the present engine start.

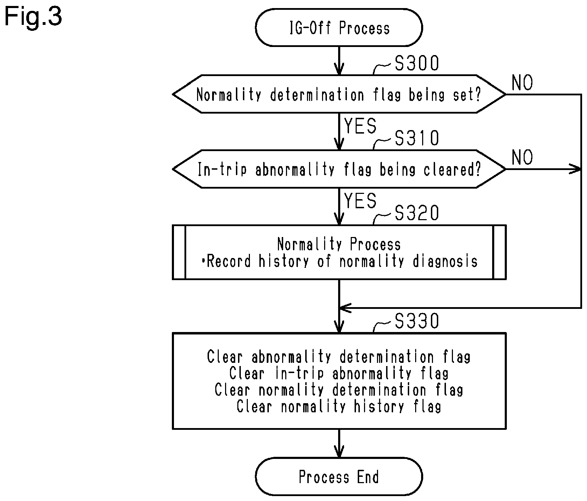

Fig. 3 is a flowchart of the IG-off process. The ECM 12 executes the IG-off process when the ignition switch 19 is turned off.

When the IG-off process starts, the ECM 12 proceeds to step S300 to determine whether the normality determination flag is set. If the normality determination flag is not set (S300: NO), the ECM 12 proceeds to step S330 and clears all of the abnormality determination flag, the in-trip abnormality flag, the normality determination flag, and the normality history flag.

If the normality determination flag is set (S300: YES), the ECM 12 proceeds to step S310 and determines whether the in-trip abnormality flag is cleared. If the in-trip abnormality flag is not cleared, that is, if the in-trip abnormality flag is set (S310: NO), the ECM 12 proceeds to step S330 and operates the flags. After executing step S330, the ECM 12 ends the present IG-off process.

If the normality determination flag is set and the in-trip abnormality flag is cleared (S300, S310: YES), the ECM 12 proceeds to step S320 to execute the normality process and then proceeds to step S330. The normality process is executed when it is diagnosed that the startability of the engine 10 is normal; more specifically, that the startability of the engine 10 has not deteriorated. In the present embodiment, the ECM 12 records a history of the normality diagnosis in the memory 14. The history of the normality diagnosis includes information indicating the states of the engine 10 and the vehicle at the time of diagnosing as normality.

### Operation and Advantages of Embodiment

The operation and advantages of the engine diagnostic device in the present embodiment will now be described.

When the abnormality history flag is set and the long cranking start occurs, the ECM 12 diagnoses the engine 10 as having an abnormality; more specifically, as having startability deterioration. When the abnormality history flag is not set and the long cranking start occurs (both S130: YES and S140: NO are satisfied), the abnormality history flag is set. When the normality history flag is set and the engine starts normally (both S130: NO and S180: YES are satisfied), the abnormality history flag is cleared. When the normality history flag is not set and the engine starts normally (both S130:NO and S180: NO are satisfied), the normality history flag is set. Thus, when the long cranking start has occurred two times, the ECM 12 diagnoses that the startability has deteriorated.

When the long cranking start occurs and then the normal start consecutively occurs a number of times, the long cranking start may again occur. In this case, the long cranking start has occurred two times. However, in this case, the normal start occurred a number of times between the two long cranking starts. Hence, the two long cranking starts may be highly likely to have occurred due to separate causes.

In this regard, when the engine normal start consecutively occurs two times, more specifically, when the normality history flag is set and the engine starts normally (S130, S180: YES), the ECM 12 clears the abnormality history flag (S200). Thus, in the above case, it is diagnosed that the startability has not deteriorated.

While one of the two long cranking starts is caused by the intermittent stop control, the other long cranking start may be caused by a factor other than the intermittent stop control. Such a case may include the following two cases.

The first case is that the first long cranking start occurs when the ignition switch 19 is turned on, and then the second long cranking start occurs in the intermittent stop control. In this case, the environmental condition of the engine 10 differs between when the engine 10 is started by turning on the ignition switch 19 and when the engine 10 is started by the intermittent stop control. The two long cranking starts are highly likely to have occurred due to separate causes. Hence, the deterioration in startability may be less likely to continue afterward.

The second case is that when the engine fails to start in the intermittent stop control and then the driver restarts the engine, the restart performed by the driver is a long cranking start. As described above, in the present embodiment, a failure to start the engine is also included in the long cranking start. Therefore, in this case, the long cranking start has occurred two times. In this case, the second long cranking start occurred immediately after the engine failed to start in the intermittent stop control. Thus, the two long cranking starts may be highly likely to have occurred due to the same cause.

In the post-start process, with the abnormality history flag cleared (S120: NO), the ECM 12 proceeds to step S130 to determine whether the long cranking start occurs only at a time of the intermittent restart. More specifically, the abnormality history flag is switched from a cleared state to a set state only when the long cranking start occurs at a time of the intermittent restart. Once the abnormality history flag is set, the determination of step S130 is executed at other times in addition to the time of the intermittent restart. Thus, of the first case and the second case, only the second case is diagnosed that the startability has deteriorated.

When the driver temporarily turns off and then turns on the ignition switch 19, the engine 10 may be restarted after the failure to start the engine 10 described in the second situation. In this regard, in the IG-off process, the ECM 12 is configured not to initialize the abnormality history flag while initializing the flags excluding the abnormality history flag. That is, the state of the abnormality history flag is maintained after the ignition switch 19 is turned off. Thus, the above case is also diagnosed that the startability has deteriorated.

In the IG-off process, the ECM 12 executes the normality process only when the normality determination flag is set and the in-trip abnormality flag is cleared. In the IG-off process, the ECM 12 clears the normality determination flag. In the post-start process, when the normal start occurs two consecutive times, the ECM 12 sets the normality determination flag.

In the post-start process, when the long cranking start occurs, the ECM 12 sets the in-trip abnormality flag. Only in the final step (S330) of the IG-off process, the ECM 12 clears the in-trip abnormality flag. Thus, the ECM 12 diagnoses that the startability has not deteriorated, that is, is normal, when the normal start occurs two or more times and no long cranking start occurs during a trip of the vehicle, which starts from when the ignition switch 19 is turned on and ends when the ignition switch 19 is turned off.

In the present embodiment, the engine diagnostic device has the following advantages.
(1) When the long cranking start occurs two times, the ECM 12 diagnoses the engine 10 as having startability deterioration. This avoids diagnosing the engine as having startability deterioration the long cranking start occurs just one time. Thus, deterioration in the startability of the engine 10 is accurately diagnosed.
(2) Even when the long cranking start occurs two times, if the normal start occurs two or more consecutive times between the long cranking starts, the ECM 12 diagnoses that the startability has not deteriorated. This eliminates a diagnosis of startability deterioration when two long cranking starts have occurred due to separate causes, indicating that the startability is temporarily deteriorated.
(3) Even when the long cranking start occurs two times, if the first long cranking start is not caused by the intermittent stop control, the ECM 12 diagnoses that the startability has not deteriorated. In contrast, when the first long cranking start is caused by the intermittent stop control and the second long cranking start is caused by a factor other than the intermittent stop control, the ECM 12 diagnoses that the startability has deteriorated. In the former case, the two long cranking starts are highly likely to have occurred due to different causes. In the latter case, the two long cranking starts are highly likely to have occurred due to the same cause. Thus, only when the long cranking start consecutively occurs due to the same cause and the deterioration of the startability is highly likely to continue afterward, it is diagnosed that the startability has deteriorated.
(4) During a start of the engine 10, the emission efficiency and the fuel efficiency are lower than during a normal operation, which is performed after the start of the engine 10 is completed. The startability deterioration of the engine 10 extends a start time of the engine 10 and thus prolongs a state in which the emission efficiency and the fuel efficiency are lowered during a start of the engine 10. When the ECM 12 diagnoses that the startability has deteriorated, the ECM 12 prohibits the intermittent stop control of the engine 10 to decrease the frequency of starting the engine 10. This limits the lowering of the emission efficiency and the fuel efficiency that are caused by startability deterioration.
(5) When an abnormality occurs in the engine 10, the ECM 12 illuminates the warning light 20 to prompt the user to inspect and repair the engine 10. However, even when the startability of the engine 10 has deteriorated, the cause of the startability deterioration may be spontaneously resolved during a soak period after the ignition switch 19 is turned off. In an example in which the startability of the engine 10 is deteriorated by the frozen throttle valve, the ice may melt during a soak period. As a result, the deterioration of the startability may be resolved. In such a case, illumination of the warning light 20 would be troublesome to the user. In this regard, the ECM 12 illuminates the warning light 20 when it is diagnosed that the startability has deteriorated in two consecutive trips. This avoids unnecessary illumination of the warning light 20.

### Other Embodiments

The present embodiment may be modified as follows. The present embodiment and the following modified examples can be combined as long as the combined modified examples remain technically consistent with each other.

In the present embodiment, when an abnormality is diagnosed in two consecutive trips, the warning light 20 is illuminated. The number of trips as the condition for illuminating the warning light 20 may be changed. In an example, the warning light 20 may be configured to be illuminated when an abnormality is diagnosed in three consecutive trips. As long as the warning light 20 is configured to be illuminated when an abnormality is diagnosed in consecutive trips, the warning light 20 will not be illuminated by a temporary deterioration in the startability, which will be spontaneously resolved in a soak period. The warning light 20 may be illuminated when the engine 10 is diagnosed as having startability deterioration in a predetermined number of consecutive trips of the vehicle. Alternatively, the warning light 20 may be illuminated at a point in time when an abnormality is diagnosed even one time.

Occurrence of an abnormality in the engine 10 may be notified by a means other than illumination of the warning light 20. In an example, the ECM 12 is configured to communicate with an external data center and transmits a notification of occurrence of an abnormality to the external data center. Additionally, in an example, the data center may notify a portable information terminal of the user of the occurrence of the abnormality.

The diagnosis of startability deterioration may be performed without distinguishing a start caused by the intermittent stop control from a start caused by other factors. In this case, in the post-start process shown in Fig. 2, steps S100 to S120 may be omitted so that the process is started from step S130.

In the above embodiment, when the normal start occurs two consecutive times, the abnormality history flag is cleared. Instead, the abnormality history flag may be cleared when the normal start occurs three or more consecutive times. Alternatively, the abnormality history flag may be cleared when the normal start occurs one time. Alternatively, the abnormality history flag may be configured not to be cleared during a trip regardless of occurrence of a normal start. In such a configuration, when the long cranking start occurs two times in a single trip, it is diagnosed as abnormality.

In the above embodiment, when the long cranking start occurs two times, it is diagnosed as abnormality. Instead, the number of long cranking starts as the condition for the abnormality diagnosis may be three or more times. More specifically, when the long cranking start has occurred N times, where N represents a predetermined natural number that is greater than or equal to two, the engine 10 may be diagnosed as having startability deterioration.

In the above embodiment, in the intermittent stop control, the ECM 12, which is an electronic control module for controlling the engine, determines a stop and a restart of the engine 10. Instead, a control module differing from the ECM 12 may determine a stop and a restart of the engine 10 in the intermittent stop control. In this case, the ECM 12 stops and restarts the engine 10 based on an instruction from the control module differing from the ECM 12.

The engine diagnostic device may be configured so that a control module differing from the ECM 12 diagnoses startability deterioration of the engine 10.

The configurations of the abnormality process and the normality process may be changed.

The configuration of the ECM 12 is not limited to that described in the above embodiment. The ECM 12 may include one or more processors that execute various processes in accordance with a computer program (software). The ECM 12 may include circuitry including one or more dedicated hardware circuits such as an application specific integrated circuit (ASIC) that execute at least some of the various processes or a combination of these. The processor includes a CPU and memory such as RAM and ROM. The memory stores program codes or instructions configured to cause the CPU to execute processes. The memory, or a computer readable medium, includes any type of medium that is accessible by a general-purpose computer and a dedicated computer.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An engine diagnostic device (12) configured to diagnose an engine (10) that executes an intermittent stop control in accordance with a traveling state of a vehicle,
wherein when N represents a predetermined natural number that is greater than or equal to two and a long cranking start refers to a start of the engine (10) taking a predetermined time or longer, if the long cranking start has occurred N times, the engine diagnostic device (12) is configured to diagnose the engine (10) as having a startability deterioration.

2. The engine diagnostic device (12) according to claim 1, wherein even when the long cranking start has occurred N times, if a start of the engine (10) taking less than the predetermined time has consecutively occurred a predetermined number of times or more during a period in which the long cranking start has occurred N times, the engine diagnostic device (12) is configured to diagnose the engine (10) as having no startability deterioration.

3. The engine diagnostic device (12) according to claim 1 or 2, wherein even when the long cranking start has occurred N times, if among the N times of the long cranking starts, a first long cranking start was not caused by the intermittent stop control, the engine diagnostic device (12) is configured to diagnose the engine (10) as having no startability deterioration.

4. The engine diagnostic device (12) according to any one of claims 1 to 3, wherein when the engine (10) is diagnosed as having a startability deterioration, the engine diagnostic device (12) prohibits the intermittent stop control.

5. The engine diagnostic device (12) according to any one of claims 1 to 4, wherein when the engine (10) is diagnosed as having a startability deterioration in a predetermined number of consecutive trips of the vehicle, the engine diagnostic device (12) issues a notification that the engine (10) has an abnormality.

6. A method for diagnosing an engine (10) that executes an intermittent stop control in accordance with a traveling state of a vehicle, the method comprising:
when N represents a predetermined natural number that is greater than or equal to two and a long cranking start refers to a start of the engine (10) taking a predetermined time or longer, if the long cranking start has occurred N times, diagnosing the engine (10) as having a startability deterioration.
